# EUROPEAN PATENT SPECIFICATION

(11) **EP 3 813 236 B1**
(45) Date of publication and mention of the grant of the patent: **17.12.2025**
(21) Application number: 19815911.3
(22) Date of filing: 28.01.2019
(51) Int. Cl.: H02K 9/06, H02K 1/32, H02K 5/20, H02K 9/08, H02K 9/14

(54) **DYNAMO-ELECTRIC MACHINE**
DYNAMO-ELEKTRISCHE MASCHINE
MACHINE DYNAMOÉLECTRIQUE

(30) Priority: 08.06.2018 JP 2018110328
(43) Date of publication of application: 28.04.2021
(73) Proprietor: Hitachi Industrial Products, Ltd., Tokyo 101-0021 (JP)
(72) Inventor: SAWADA, Itsurou, Tokyo 100-8280 (JP); FUJII, Katsuhiko, Tokyo 100-8280 (JP); KUDO, Taro, Tokyo 100-8280 (JP); TAMURA, Tatsuhiro, Tokyo 100-8280 (JP)
(74) Representative: MERH-IP Matias Erny Reichl Hoffmann Patentanwälte PartG mbB
(86) International application number: PCT/JP2019/002759
(87) International publication number: WO 2019/234967

(56) References cited:
- DE-C- 925 596
- GB-A- 467 527
- JP-A- 2003 143 809
- JP-A- 2004 187 352
- JP-A- 2004 312 875
- JP-A- 2006 050 807
- JP-A- 2006 180 684
- JP-U- S53 154 307
- US-A1- 2004 150 270

## Description

### Technical Field

The present invention relates to a rotating electric machine and, more particularly, to a rotating electric machine suitable for the cooling of the interior of the machine by air.

### Background Art

Typically, when a rotating electric machine is operated as an electric motor to convert electrical input into mechanical output, and when it is operated as a generator to convert mechanical input into electrical output, the rotating electric machine produces heat caused by an eddy current loss or a Joule loss.

On the other hand, upper limit temperatures are specified individually for materials of components making up the rotating electric machine. This creates a need to perform cooling to prevent a temperature in each component from exceeding its upper limit temperature during operation as the electric motor or generator.

Well-known methods of cooling such rotating electric machines include a cooling method using air.

The air cooling method is a cooling method by which air is applied directly or indirectly to a heat producing portion of the rotating electric machine in order to remove heat from the heat producing portion to cool it.

The air cooling method can be grouped into a forced air cooling method using a device such as a fan and/or the like to produce a forced flow of air for cooling, and a natural air cooling method using natural convection for thermal dissipation without a device such as a fan and/or the like.

A rotating electric machine adopting the forced air cooling method of them is disclosed, for example, in PTL 1.

The structure described in PTL 1 has a fan mounted at one end of a rotor of a rotating electric machine to rotate integrally with the rotor, in which the fan is rotated in order to take in air around the motor into the motor, and the air thus taken in is passed through a ventilation passage provided within the motor in order to cool the motor, and then the air is ejected out of the motor.

PTL 2 shows a fan arrangement for electrical machines, in which the fan rotates radially within the parts of the machine to be cooled, which are in particular arranged in a grid-like manner. Further, PTL 2 describes the use of a fan with forward-curved blades, which blows the radially outwardly conveyed air against the parts to be cooled.

PTL 3 shows a totally-enclosed motor for vehicle drive. Further, the totally-enclosed motor of PTL 3 shows an annular cooling air path which is provided on the inside-the-motor side surface of a bearing support member at the opposite driving side of the electric motor. In Detail, PTL 2 relates to an auxiliary fan which is provided at the end of a rotor shaft at the outside-the-motor side of the bearing support member.

### Citation List

### Patent Literature

PTL 1: Japanese Patent Application Laid-Open No. 2001-78390
PTL 2: DE 925 596 C
PTL 3: JP 2006 180684 A

### Summary of Invention

### Technical Problem

When colling air is passed through the interior of the motor, typically, over a rotating surface of the fan, a force is exerted on the air from the inner diameter side toward the outer diameter side by a centrifugal force. Therefore, in an area in contact with the rotating surface of the fan, when the air is passed from the outer diameter side toward the inner diameter side to oppose the centrifugal force, a resistance is produced, leading to a loss of the fan.

To prevent this, in PTL 1, as disclosed in Figure 8, a partition plate 16 is placed to provide a partition between the rotating surface 15c of the fan 15 and the internal air within the machine.

However, since the partition plate 16 described in PTL 1 extends perpendicularly from the outer diameter side toward the inner diameter side, a flow of the internal air produced by the fan 15 comes into collision with the partition plate 16 to cause a high loss of the fan. Also, because of a large gap between the partition plate 16 and the rotating surface 15c of the fan 15, a secondary flow of air is produced in the gap, which in turn becomes a factor of a fan loss. This may result in a risk of decreasing the efficiency of the rotating electric machine.

In view of the foregoing, it is an object of the present invention to provide a rotating electric machine using a fan to cool the interior of the machine and enabling a reduction in fan loss for improved efficiency. Solution to Problem

To achieve the object, the present invention provides a rotating electrical machine as defined in claim 1.

### Advantageous Effects of Invention

According to the present invention, although a fan is used to cool the interior of a machine, a loss of the fan is reduced to improve the efficiency of the rotating electric machine.

### Brief Description of Drawings

Figure 1 is a sectional view illustrating Example 1 of a rotating electric machine.
Figure 2 is a sectional view illustrating Example 2 of a rotating electric machine.
Figure 3 is a sectional view illustrating Example 3 of a rotating electric machine.
Figure 4 is a sectional view illustrating Example 4 of a rotating electric machine according to the present invention.
Figure 5 is a sectional view illustrating Example 5 of a rotating electric machine.

### Description of Embodiments

A rotating electric machine according to the present invention will now be described based on illustrative examples. It is noted that, in each example, like reference signs are used to identify like or identical components.

### <Example 1>

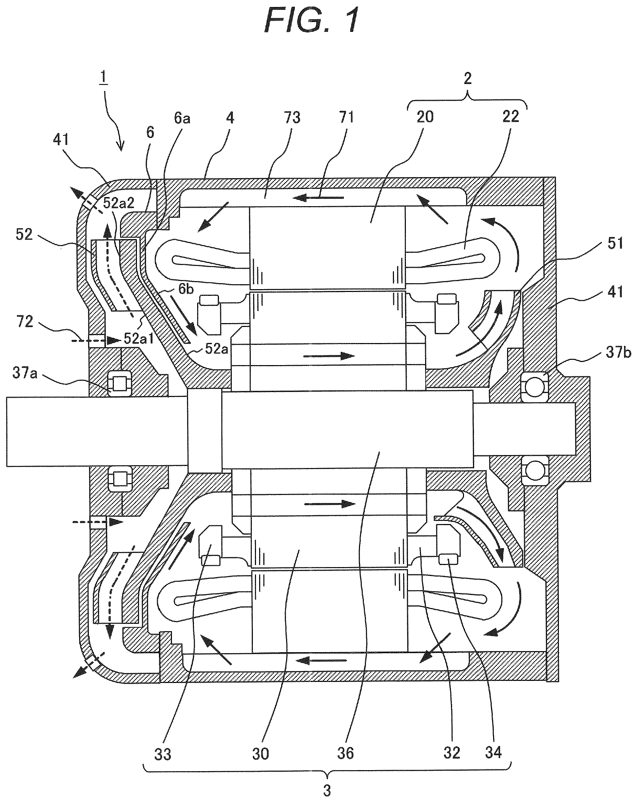

Figure 1 illustrates Example 1 of a rotating electric machine.

The rotating electric machine illustrated in Figure 1 is illustrated as an example application to an induction electric motor.

It is noted that a rotating electric machine described in each of the following examples is described as an induction electric motor, but the present invention is not particularly limited to this and, as long as the rotating electric machine is of an air cooled type, the same advantageous effects can be produced even when the present invention is applied to a permanent magnet synchronous electric motor.

The rotating electric machine 1 which is an induction electric motor illustrated in Figure 1 roughly includes a stator 2, a rotor 3 located on the opposite side of a predetermined gap from the inner diameter side of the stator 2, and a frame 4 holding the stator 2.

Describing in more details, the stator 2 includes a stator core 20 and stator coils 22 that are located on the inner diameter side of the stator core 20 and also wound (mounted) in a plurality of stator slots (not shown) which are formed at predetermined intervals in a circumferential direction to extend in a rotation axis direction.

Further, the rotor 3 includes: a rotor core 30 placed on the opposite side of a predetermined gap in a radial direction from the stator core 20; a plurality of rotor bars 32 that are field members located on the outer diameter side of the rotor core 30 and also inserted (mounted) in a plurality of rotor slots (not shown) which are formed at predetermined intervals in a circumferential direction to extend in a rotation axis direction; end rings 33 which are conductors for a short circuit at both shaft ends of each rotor bar 32; retaining rings 34 for each retaining each rotor bar 32 and the end rings 33; and a shaft 36 fitted over the rotor core 30. The shaft 36 is held rotatably by bearings 37a, 37b. It is noted that reference sign 41 denotes end brackets closing both axial ends of the rotating electric machine 1.

Also, an inner fan 51 is attached to one end of the rotor 3 in the axis direction for circulation of internal air 71, while an outer fan 52 is attached to the other end of the rotor 3 in the axis direction (the rotor 3 on the opposite side to the side where the inner fan 51 is mounted) for intake of external air 72. Both the fans rotate integrally with the rotor 3 to function as a fan.

And, in the example, on the inward facing side of a main plate 52a of the outer fan 52, a metal made partition plate 6 with one end secured to the frame 4 is mounted to extend along the surface of the main plate 52a of the outer fan 52 such that a gap between the main plate 52a and the partition plate 6 is approximately constant. The partition plate 6 extends to the inner diameter side beyond the outer diameter surface of the rotor core 30 to cover the entire surface of the inward facing side of the main plate 52a such that the entire surface is not exposed to the internal air 71 by the inner fan 51.

Specifically, the main plate 52a of the outer fan 52 which is mounted on the opposite side of the rotor 3 to the side where the inner fan 51 is mounted, includes: an inclined portion 52a1 widening outward in the axis direction as the inclined portion 52a1 extends outward in the radial direction from the mounted portion to the rotor 3 as a starting point; and vertical portion 52a2 extending vertically outward in the radial direction continuously from a distal end of the inclined portion 52a1. On the other hand, the partition plate 6 with one end fixed to the frame 4 includes: a vertical portion 6a extending vertically inward in the radial direction from a fixed portion to the frame 4 as a starting point; and an inclined portion 6b inclined along the inclined portion 52a1 of the main plate 52a continuously from a distal end of the vertical portion 6a.

And, the inclined portion 52a1 of the main plate 52a of the outer fan 52 and the inclined portion 6b of the partition plate 6, and also the vertical portion 52a2 of the main plate 52a of the outer fan 52 and the vertical portion 6a of the partition plate 6 are arranged to have an approximately constant gap between the inclined portions and between the vertical portions. The vertical portion 6a and the inclined portion 6b of the partition plate 6 cover the entire surface of the inward facing side of the main plate 52a of the outer fan 52, i.e., the inclined portion 52a1 and the vertical portion 52a2 of the main plate 52a, to prevent the entire surface from being exposed to the internal air 71 by the inner fan 51. At this time, the inner diameter position of the partition plate 6 extends toward the inner diameter side beyond the outer diameter surface of the rotor core 30.

In the example of such configurations, by the rotation of the inner fan 51, the internal air 71 flows through the internal air flow passage 73 and circulates in the rotating electric machine 1 in a counterclockwise direction in a cross section shown in Figure 1. In this process, in proximity to the partition plate 6, the internal air 71 having passed through the internal air flow passage 73 flows from the outer diameter side toward the inner diameter side along the vertical portion 6a and the inclined portion 6b of the partition plate 6. On the other hand, since, similarly to the inner fan 51, the outer fan 52 rotates integrally with the rotor 3, the external air 72 flows from the inner diameter side to the outer diameter side along the inclined portion 52a1 and the vertical portion 52a2 of the main plate 52a, and thus a force from the inner diameter toward the outer diameter side is exerted on the internal air 71 touching the main plate 52a.

Therefore, if the partition plate 6 is not provided as conventional machines, the entire surface of the main plate 52a of the outer fan 52 will touch the internal air 71. Then, for the internal air 71 to be circulated from the outer diameter side toward the inner diameter side by the inner fan 51, the external air 72 will provide a force from the inner diameter side toward the outer diameter side in the opposite direction by the outer fan 52. This has resulted in an increase in fan loss.

In contrast to this, as in the example, the vertical portion 6a and the inclined portion 6b of the partition plate 6 with one end secured to the frame 4 are attached to extend along the surfaces of the vertical portion 52a2 and the inclined portion 52a1 of the main plate 52a of the outer fan 52 such that an approximately constant gap from the main plate 52a is ensured. And, the vertical portion 6a and the inclined portion 6b of the partition plate 6 cover the entire surface of the inward facing side of the main plate 52a to prevent the entire surface from being exposed to the internal air 71 by the inner fan 51. As a result, the nonrotating and stationary partition plate 6 is able to achieve separation between the internal air 71 by the inner fan 51 and the external air 72 by the outer fan 52. Because of this, the internal air 71 to be circulated from the outer diameter side toward the inner diameter side is provided with no force from the inner diameter side toward the outer diameter side in the opposite direction, and thus an increase in fan loss can be reduced.

Also, because the power of both the inner fan 51 and the outer fan 52 is of the required power of the rotating electric machine 1, the reduction in fan loss leads to improved efficiency of the rotating electric machine 1.

It is noted that the partition plate 6 is desirably formed in a shape extending to the inner diameter side beyond the outer diameter surface of the rotor core 30 along the surface of the main plate 52a of the outer fan 52 after an approximately constant gap from the main plate 52a is ensured to keep the partition plate 6 from contact with the main plate 52a. The partition plate 6 is also desirably shaped to cover as large a range of the surface of the inward facing side of the main plate 52a of the outer fan 52 as possible.

Also, the rotor bar 32 is described as a field member in the example, but the field member may be a permanent magnet or rotor winding other than the rotor bar 32 (the same holds true in other examples described below).

### <Example 2>

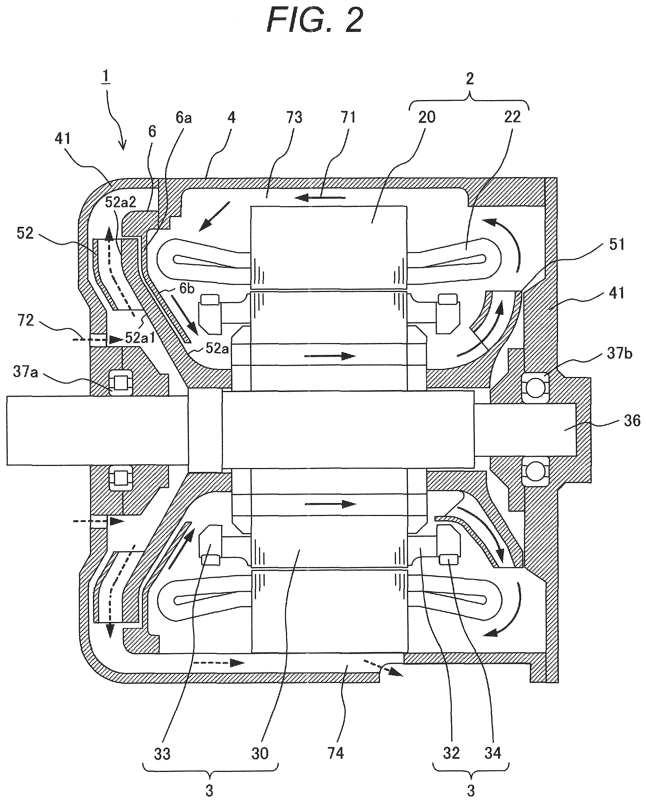

Figure 2 illustrates Example 2 of a rotating electric machine.

The rotating electric machine 1 according to Example 1 illustrated in Figure 1 is structured such that the external air 72 taken in from outside the rotating electric machine 1 by the outer fan 52 is ejected from an upper portion of the end bracket 41 via the outer fan 52. The external air 72 by the outer fan 52 is mainly intended for cooling one bearing 37a of the bearings. The rotating electric machine 1 according to Example 2 illustrated in Figure 2 is structured such that the external air 72 having passed through the outer fan 52 passes through an external air flow passage 74 that is placed between the stator core 20 and the frame 4, and then the external air 72 is ejected out of the rotating electric machine 1. The rest of the structure is similar or identical to that in Example 1.

By such structures according to the example, the structure of the partition plate 6 and the outer fan 52 is similar or identical to that in Example 1 and the advantageous effects thereof are also similar or identical to those in Example 1. However, in the structure, because the external air 72 taken in by the outer fan 52 can be brought into direct contact with the stator core 20, higher cooling performance can be achieved.

### <Example 3>

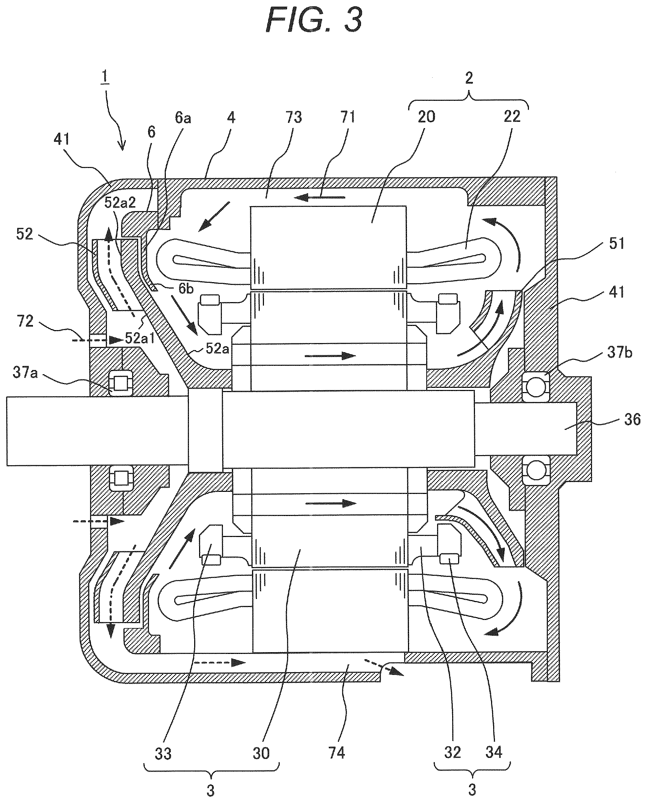

Figure 3 illustrates Example 3 of a rotating electric machine.

In Example 1 and Example 2 illustrated in Figures 1 and 2, the partition plate 6 extends to the inner diameter side beyond the outer diameter surface of the rotor core 30 to prevent the entire surface of the inward facing side of the main plate 52a from being exposed to the internal air 71 by the inner fan 51. However, in the rotating electric machine 1 according to Example 3 illustrated in Figure 3, the partition plate 6 has an inner diameter position situated closer to the outer diameter side than the outer diameter surface of the rotor core 30 to prevent a portion of the surface of the inward facing side of the main plate 52a from being exposed to the internal air 71 by the inner fan 51.

Specifically, the inclined portion 52a1 of the main plate 52a of the outer fan 52 and the inclined portion 6b of the partition plate 6, and also the vertical portion 52a2 of the main plate 52a of the outer fan 52 and the vertical portion 6a of the partition plate 6 are arranged to have an approximately constant gap between the inclined portions and between the vertical portions. The vertical portion 6a and the inclined portion 6b of the partition plate 6 cover a portion of the surface on the inward facing side of the main plate 52a of the outer fan 52, i.e., a portion of the inclined portion 52a1 and the vertical portion 52a2 of the main plate 52a, to prevent the portion of the surface of the inward facing side from being exposed to the internal air 71 by the inner fan 51.

At this time, the inner diameter position of the partition plate 6 is situated closer to the outer diameter side than the outer diameter surface of the rotor core 30. The rest of the structure is similar or identical to that in Example 1.

By such structures according to the example, it is a foregone conclusion that the advantageous effects similar or identical to those in Example 1 can be provided, and additionally, during assembly of the rotating electric machine 1, after the inner fan 51 and the outer fan 52 are mounted to the rotor 3, the rotor 3 can be inserted into the space on the inner diameter side of the stator 2 from the left side of Figure 3 toward the right side.

Further, in the assembly of the rotating electric machine 1, in some cases, after preliminary balance adjustment is made to the rotor 3 into which the components are assembled, the rotor 3 as one piece may be assembled to the stator 2. However, in the conditions in Examples 1 and 2 (the conditions where the partition plate 6 extends toward the inner diameter side beyond the outer diameter surface of the rotor core 30), the rotor 3 will come into contact with the partition plate 6, and therefore the assembly is made impossible.

In contrast to this, as in the example illustrated in Figure 3, if the inner diameter position of the partition plate 6 is situated outward of the outer diameter surface of the rotor core 30, this allows the completely assembled rotor 3 to be inserted as one piece into the space on the inner diameter side of the stator 2 without any change.

In comparison with Examples 1 and 2, in the example, because of a decrease of the available area of the partition plate 6 for separation between the internal air 71 and the main plate 52a of the outer fan 52, the efficacy of decreasing the fan loss is reduced. However, because the influence of the rotation of the outer fan 52 is greater on the outer diameter side with a higher rotation speed, a difference in efficiency reduction from Examples 1 and 2 can be reduced by using the partition plate 6 to cover the surface of the main plate 52a on the outer diameter side with a higher rotation speed.

### <Example 4>

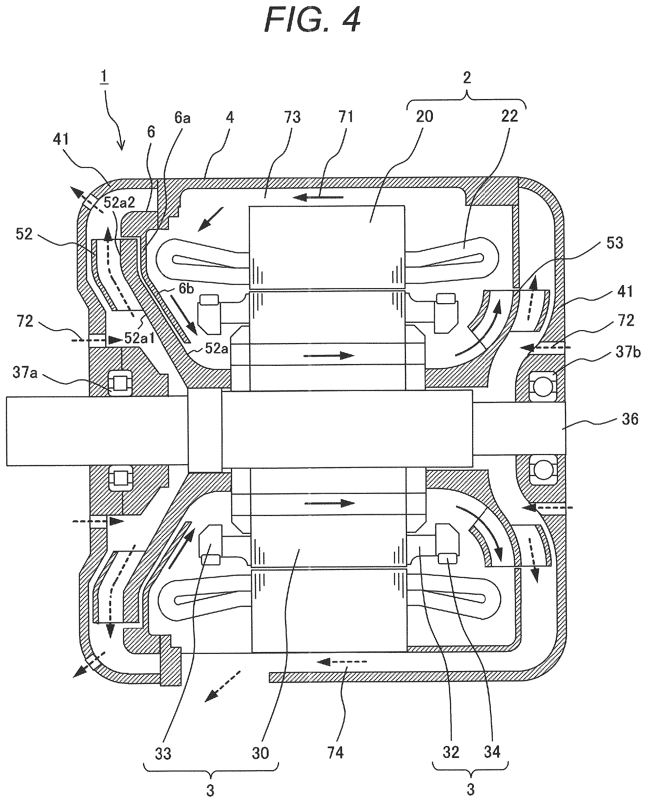

Figure 4 illustrates Example 4 of a rotating electric machine according to the present invention.

The rotating electric machine 1 according to Example 4 illustrated in Figure 4 is characterized by designing a fan mounted on the right side of the rotor 3 as an inner cum outer fan 53 that has the combined function of the inner fan for circulating the internal air 71 and the outer fan for taking in the external air 72. The rest of the structure is similar or identical to that in Example 1.

By such structures according to the example, it is a foregone conclusion that the advantageous effects similar or identical to those in Example 1 can be provided. In addition, the inner cum outer fan 53 mounted to the right side of the rotor 3 is able to circulate the internal air 71 and also take in the external air 72 to cool the right bearing 37b of the rotating electric machine 1 as well as cooling the stator 2 and the rotor 3. On the other hand, the outer fan 52 mounted to the left side of the rotor 3 is able to cool the left bearing 37a of the rotor 3.

### <Example 5>

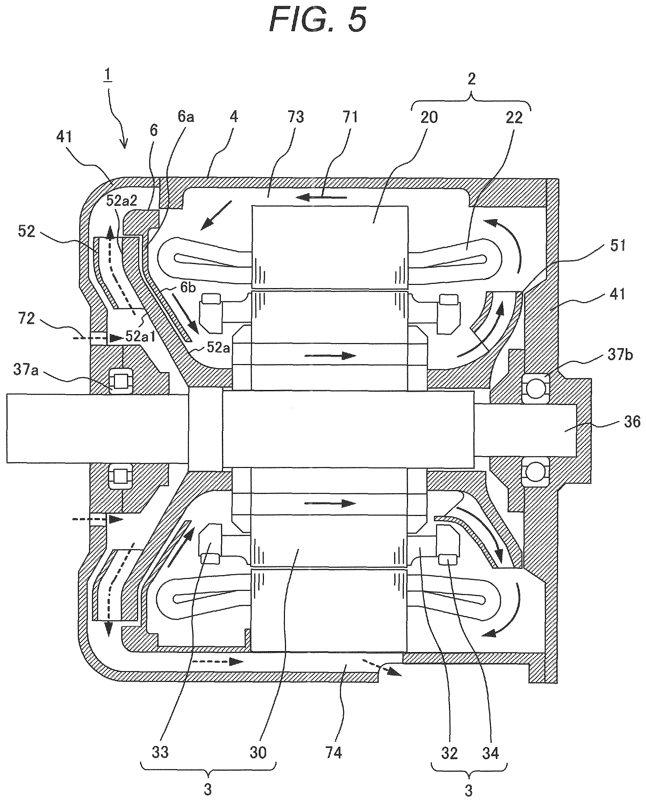

Figure 5 illustrates Example 5 of a rotating electric machine.

In the rotating electric machines 1 according to Examples 1 to 4 described above, all the partition plates 6 are attached to the frame 4. However, the rotating electric machine 1 according to the example illustrated in Figure 5 is characterized by attaching the partition plate 6 to the stator core 20.

It is noted that, in the rotating electric machines 1 according to Examples 1 to 4, the partition plate 6 is attached to the metal made frame 4. However, in the rotating electric machine 1 according to the example, because the partition plate 6 is attached to the stator core 20, the partition plate 6 is required to be a non-magnetic member made of resin and/or the like.

In this manner, an article to which the partition plate 6 is secured is not limited to the frame 4 as long as it is a stationary component. Therefore, as in the example, even if the partition plate 6 is secured to the stator core 20, similar or identical advantageous effects to Example 1 can be provided.

The present invention is not limited to the described embodiments. Alterations and/or modifications of the described embodiments are contemplated as being alternative forms of the invention as far as they do not depart from the scope of the invention, which is defined by the appended claims.

### Reference Signs List

- 1: Rotating electric machine
- 2: Stator
- 3: Rotor
- 4: Frame
- 6: Partition plate
- 6a: Vertical portion of partition plate
- 6b: Inclined portion of partition plate
- 20: Stator core
- 22: Stator coil
- 30: Rotor core
- 32: Rotor bar
- 33: End ring
- 34: Retaining ring
- 36: Shaft
- 37a, 37b: Bearing
- 41: End bracket
- 51: Inner fan
- 52: Outer fan
- 52a: Main plate of outer fan
- 52a1: Inclined portion of main plate
- 52a2: Vertical portion of main plate
- 53: Inner cum outer fan
- 71: Internal air
- 72: External air
- 73: Internal air flow passage
- 74: External air flow passage

## Claims

1. A rotating electric machine, comprising:
a stator (2);
a rotor (3) that is located on an opposite side of a predetermined gap from an inner diameter side of the stator (2);
a frame (4) that supports the stator (2);
the stator (2) including a stator core (20), and stator coils (22) that are located on an inner diameter side of the stator core (20) and mounted in a plurality of stator slots which are formed at predetermined intervals in a circumferential direction to extend in an axis direction,
the rotor (3) including a rotor core (30) that is located on an opposite side of a predetermined gap in a radial direction from the stator core (20), and field members that are located on an outer diameter side of the rotor core (30) and mounted in a plurality of rotor slots which are formed at predetermined intervals in a circumferential direction to extend in an axis direction;
a single inner fan (51) that is attached to one end of the rotor (3) in the axis direction, and circulates internal air (71); and
a single outer fan (52) that is attached to the rotor (3) on an opposite side to a side where the single inner fan (51) is attached, the outer fan (52) taking in external air (72),
wherein the rotating electric machine further comprises a partition plate (6) that is placed inward of a main plate (52a) of the outer fan (52) and secured to either the frame (4) or the stator core (20), and
the partition plate (6) is attached to extend along a surface of the main plate (52a) of the outer fan (52) and to have an approximately constant gap from the main plate (52a), and either a portion of or an entire range of an axially inward facing side surface of the main plate (52a) is covered with the partition plate (6),
**characterized in that**
the inner fan (51) is an inner cum outer fan (53) having a combined function of an inner fan (51) circulating the internal air (71) and an outer fan (52) taking in the external air (72).

2. The rotating electric machine according to claim 1,
wherein an external air flow passage (74) is provided between the stator core (20) and the frame (4), and
the external air (72) having passed through the outer fan (52) is ejected after passing through the external air flow passage (74).

3. The rotating electric machine according to any one of claims 1 to 2,
wherein the partition plate (6) covers the entire range of the axially inward facing side surface of the main plate (52a) to prevent the entire range of the axially inward facing side surface from being exposed to the internal air (71) by the inner fan (51).

4. The rotating electric machine according to claim 3,
wherein the main plate (52a) of the outer fan (52) includes an inclined portion (52a1) that widens outward in the axis direction as the inclined portion (52a1) extends outward in a radial direction from a mounted portion to the rotor (3) as a starting point, and a vertical portion (52a2) that extends vertically outward in the radial direction continuously from a distal end of the inclined portion (52a1),
the partition plate (6) includes a vertical portion (6a) that extends vertically inward in the radial direction from a fixed portion to either the frame (4) or the stator core (20) as a starting point, and an inclined portion (6b) that is inclined along the inclined portion (52a1) of the main plate (52a) continuously from a distal end of the vertical portion (6a) of the partition plate (6), and
the inclined portion (52a1) of the main plate (52a) and the inclined portion (6b) of the partition plate (6), and also the vertical portion (52a2) of the main plate (52a) and the vertical portion (6a) of the partition plate (6) are arranged to have an approximately constant gap, and the vertical portion (6a) and the inclined portion (6b) of the partition plate (6) cover entire surfaces of the inclined portion (52a1) and the vertical portion (52a2) of the main plate (52a) to prevent the entire surfaces from being exposed to the internal air (71) by the inner fan (51).

5. The rotating electric machine according to claim 3 or 4,
wherein the partition plate (6) covering the entire range of the axially inward facing side surface of the main plate (52a) extends to an inner diameter side of the rotor (3) beyond an outer diameter surface of the rotor core (30).

6. The rotating electric machine according to any one of claims 1 to 2,
wherein the partition plate (6) covers the portion of the axially inward facing side surface of the main plate (52a) to prevent the portion of the axially inward facing side surface from being exposed to the internal air (71) by the inner fan (51).

7. The rotating electric machine according to claim 6,
wherein the main plate (52a) of the outer fan (52) includes an inclined portion (52a1) that widens outward in the axis direction as the inclined portion (52a1) extends outward in a radial direction from a mounted portion to the rotor (3) as a starting point, and a vertical portion (52a2) that extends vertically outward in the radial direction continuously from a distal end of the inclined portion (52a1),
the partition plate (6) includes a vertical portion (6a) that extends vertically inward in the radial direction from a fixed portion to either the frame (4) or the stator core (20) as a starting point, and an inclined portion (6b) that is inclined along the inclined portion (52a1) of the main plate (52a) continuously from a distal end of the vertical portion (6a) of the partition plate (6), and
the inclined portion (52a1) of the main plate (52a) and the inclined portion (6b) of the partition plate (6), and also the vertical portion (52a2) of the main plate (52a) and the vertical portion (6a) of the partition plate (6) are arranged to have an approximately constant gap, and the vertical portion (6a) and the inclined portion (6b) of the partition plate (6) cover a portion of surfaces of the inclined portion (52a1) and the vertical portion (52a2) of the main plate (52a) to prevent the portion from being exposed to the internal air (71) by the inner fan (51).

8. The rotating electric machine according to claim 6 or 7,
wherein the partition plate (6) covering the portion of the axially inward facing side surface of the main plate (52a) has an inner diameter position of the rotor (3) situated closer to an outer diameter side than an outer diameter surface of the rotor core (30).

9. The rotating electric machine according to any one of claims 1 to 8,
wherein the partition plate (6) is secured to the frame (4) and is made of metal.

10. The rotating electric machine according to any one of claims 1 to 8,
wherein the partition plate (6) is secured to the stator core (20) and is formed of non-magnetic material.

11. The rotating electric machine according to any one of claims 1 to 10,
wherein the field members are any one of rotor bars (32), permanent magnets, and rotor windings.

## Patentansprüche

1. Rotierende elektrische Maschine umfassend:
einen Stator (2);
einen Rotor (3), der auf einer gegenüberliegenden Seite eines vorbestimmten Spalts von einer Innendurchmesserseite des Stators (2) angeordnet ist;
einen Rahmen (4), der den Stator (2) trägt;
wobei der Stator (2) einen Statorkern (20) und Statorspulen (22) umfasst, die auf einer Innendurchmesserseite des Statorkerns (20) angeordnet und in einer Vielzahl von Statorschlitzen montiert sind, die in vorbestimmten Abständen in einer Umfangsrichtung ausgebildet sind, um sich in einer Achsenrichtung zu erstrecken,
wobei der Rotor (3) einen Rotorkern (30), der auf einer gegenüberliegenden Seite eines vorbestimmten Spalts in einer radialen Richtung von dem Statorkern (20) angeordnet ist, und Feldelemente umfasst, die auf einer Außendurchmesserseite des Rotorkerns (30) angeordnet und in einer Vielzahl von Rotorschlitzen montiert sind, die in vorbestimmten Abständen in einer Umfangsrichtung ausgebildet sind, um sich in einer Achsenrichtung zu erstrecken;
einen einzelnen inneren Lüfter (51), der an einem Ende des Rotors (3) in der Achsenrichtung angebracht ist und Innenluft (71) zirkuliert; und
einen einzelnen äußeren Lüfter (52), der an dem Rotor (3) auf einer gegenüberliegenden Seite zu einer Seite angebracht ist, an der der einzelne innere Lüfter (51) angebracht ist, wobei der äußere Lüfter (52) Außenluft (72) aufnimmt,
wobei die rotierende elektrische Maschine ferner eine Trennplatte (6) umfasst, die innerhalb einer Hauptplatte (52a) des äußeren Lüfters (52) platziert ist und entweder an dem Rahmen (4) oder dem Statorkern (20) befestigt ist, und
die Trennplatte (6) angebracht ist, um sich entlang einer Oberfläche der Hauptplatte (52a) des äußeren Lüfters (52) zu erstrecken und einen ungefähr konstanten Spalt von der Hauptplatte (52a) aufzuweisen, und entweder ein Abschnitt oder ein gesamter Bereich einer axial nach innen weisenden Seitenfläche der Hauptplatte (52a) mit der Trennplatte (6) bedeckt ist,
**dadurch gekennzeichnet, dass**
der innere Lüfter (51) ein innerer und äußerer Lüfter (53) ist, der eine kombinierte Funktion eines inneren Lüfters (51), der die Innenluft (71) zirkuliert, und eines äußeren Lüfters (52), der die Außenluft (72) aufnimmt, aufweist.

2. Rotierende elektrische Maschine nach Anspruch 1,
wobei ein Außenluftströmungsdurchgang (74) zwischen dem Statorkern (20) und dem Rahmen (4) bereitgestellt ist, und
die Außenluft (72), die durch den äußeren Lüfter (52) gegangen ist, ausgestoßen wird, nachdem sie durch den Außenluftströmungsdurchgang (74) gegangen ist.

3. Rotierende elektrische Maschine nach einem der Ansprüche 1 bis 2,
wobei die Trennplatte (6) den gesamten Bereich der axial nach innen weisenden Seitenfläche der Hauptplatte (52a) bedeckt, um zu verhindern, dass der gesamte Bereich der axial nach innen weisenden Seitenfläche der Innenluft (71) durch den inneren Lüfter (51) ausgesetzt wird.

4. Rotierende elektrische Maschine nach Anspruch 3,
wobei die Hauptplatte (52a) des äußeren Lüfters (52) einen geneigten Abschnitt (52a1), der sich in der Achsenrichtung nach außen verbreitert, wenn sich der geneigte Abschnitt (52a1) in einer radialen Richtung von einem montierten Abschnitt zu dem Rotor (3) als ein Startpunkt nach außen erstreckt, und einen vertikalen Abschnitt (52a2) umfasst, der sich in der radialen Richtung kontinuierlich von einem distalen Ende des geneigten Abschnitts (52a1) vertikal nach außen erstreckt,
die Trennplatte (6) einen vertikalen Abschnitt (6a), der sich in der radialen Richtung von einem fixierten Abschnitt zu entweder dem Rahmen (4) oder dem Statorkern (20) als ein Startpunkt vertikal nach innen erstreckt, und einen geneigten Abschnitt (6b) umfasst, der entlang des geneigten Abschnitts (52a1) der Hauptplatte (52a) kontinuierlich von einem distalen Ende des vertikalen Abschnitts (6a) der Trennplatte (6) geneigt ist, und
der geneigte Abschnitt (52a1) der Hauptplatte (52a) und der geneigte Abschnitt (6b) der Trennplatte (6) und auch der vertikale Abschnitt (52a2) der Hauptplatte (52a) und der vertikale Abschnitt (6a) der Trennplatte (6) angeordnet sind, um einen ungefähr konstanten Spalt aufzuweisen, und der vertikale Abschnitt (6a) und der geneigte Abschnitt (6b) der Trennplatte (6) gesamte Oberflächen des geneigten Abschnitts (52a1) und des vertikalen Abschnitts (52a2) der Hauptplatte (52a) bedecken, um zu verhindern, dass die gesamten Oberflächen der Innenluft (71) durch den inneren Lüfter (51) ausgesetzt werden.

5. Rotierende elektrische Maschine nach Anspruch 3 oder 4,
wobei sich die Trennplatte (6), die den gesamten Bereich der axial nach innen weisenden Seitenfläche der Hauptplatte (52a) bedeckt, zu einer Innendurchmesserseite des Rotors (3) über eine Außendurchmesseroberfläche des Rotorkerns (30) hinaus erstreckt.

6. Rotierende elektrische Maschine nach einem der Ansprüche 1 bis 2,
wobei die Trennplatte (6) den Abschnitt der axial nach innen weisenden Seitenfläche der Hauptplatte (52a) bedeckt, um zu verhindern, dass der Abschnitt der axial nach innen weisenden Seitenfläche der Innenluft (71) durch den inneren Lüfter (51) ausgesetzt wird.

7. Rotierende elektrische Maschine nach Anspruch 6,
wobei die Hauptplatte (52a) des äußeren Lüfters (52) einen geneigten Abschnitt (52a1), der sich in der Achsenrichtung nach außen verbreitert, wenn sich der geneigte Abschnitt (52a1) in einer radialen Richtung von einem montierten Abschnitt zu dem Rotor (3) als ein Startpunkt nach außen erstreckt, und einen vertikalen Abschnitt (52a2) umfasst, der sich in der radialen Richtung kontinuierlich von einem distalen Ende des geneigten Abschnitts (52a1) vertikal nach außen erstreckt,
die Trennplatte (6) einen vertikalen Abschnitt (6a), der sich in der radialen Richtung von einem fixierten Abschnitt zu entweder dem Rahmen (4) oder dem Statorkern (20) als ein Startpunkt vertikal nach innen erstreckt, und einen geneigten Abschnitt (6b) umfasst, der entlang des geneigten Abschnitts (52a1) der Hauptplatte (52a) kontinuierlich von einem distalen Ende des vertikalen Abschnitts (6a) der Trennplatte (6) geneigt ist, und
der geneigte Abschnitt (52a1) der Hauptplatte (52a) und der geneigte Abschnitt (6b) der Trennplatte (6) und auch der vertikale Abschnitt (52a2) der Hauptplatte (52a) und der vertikale Abschnitt (6a) der Trennplatte (6) angeordnet sind, um einen ungefähr konstanten Spalt aufzuweisen, und der vertikale Abschnitt (6a) und der geneigte Abschnitt (6b) der Trennplatte (6) einen Abschnitt von Oberflächen des geneigten Abschnitts (52a1) und des vertikalen Abschnitts (52a2) der Hauptplatte (52a) bedecken, um zu verhindern, dass der Abschnitt der Innenluft (71) durch den inneren Lüfter (51) ausgesetzt wird.

8. Rotierende elektrische Maschine nach Anspruch 6 oder 7,
wobei die Trennplatte (6), die den Abschnitt der axial nach innen weisenden Seitenfläche der Hauptplatte (52a) bedeckt, eine Innendurchmesserposition des Rotors (3) aufweist, die näher an einer Außendurchmesserseite als eine Außendurchmesseroberfläche des Rotorkerns (30) angeordnet ist.

9. Rotierende elektrische Maschine nach einem der Ansprüche 1 bis 8,
wobei die Trennplatte (6) an dem Rahmen (4) befestigt ist und aus Metall hergestellt ist.

10. Rotierende elektrische Maschine nach einem der Ansprüche 1 bis 8,
wobei die Trennplatte (6) an dem Statorkern (20) befestigt ist und aus nichtmagnetischem Material gebildet ist.

11. Rotierende elektrische Maschine nach einem der Ansprüche 1 bis 10,
wobei die Feldelemente eines von Rotorstäben (32), Permanentmagneten und Rotorwicklungen sind.

## Revendications

1. Machine électrique tournante, comprenant :
un stator (2) ;
un rotor (3) qui est situé sur un côté opposé d'un espace prédéterminé par rapport à un côté de diamètre intérieur du stator (2) ;
un cadre (4) qui supporte le stator (2) ;
le stator (2) comprenant un noyau de stator (20), et des bobines de stator (22) qui sont situées sur un côté de diamètre intérieur du noyau de stator (20) et montées dans une pluralité de fentes de stator qui sont formées à des intervalles prédéterminés dans une direction circonférentielle pour s'étendre dans une direction axiale,
le rotor (3) comprenant un noyau de rotor (30) qui est situé sur un côté opposé d'un espace prédéterminé dans une direction radiale par rapport au noyau de stator (20), et des éléments de champ qui sont situés sur un côté de diamètre extérieur du noyau de rotor (30) et montés dans une pluralité de fentes de rotor qui sont formées à des intervalles prédéterminés dans une direction circonférentielle pour s'étendre dans une direction axiale ;
un ventilateur intérieur unique (51) qui est fixé à une extrémité du rotor (3) dans la direction axiale, et fait circuler de l'air interne (71) ; et
un ventilateur extérieur unique (52) qui est fixé au rotor (3) sur un côté opposé à un côté où le ventilateur intérieur unique (51) est fixé, le ventilateur extérieur (52) aspirant de l'air externe (72),
dans laquelle la machine électrique tournante comprend en outre une plaque de séparation (6) qui est placée vers l'intérieur d'une plaque principale (52a) du ventilateur extérieur (52) et fixée soit au cadre (4) soit au noyau de stator (20), et
la plaque de séparation (6) est fixée pour s'étendre le long d'une surface de la plaque principale (52a) du ventilateur extérieur (52) et pour avoir un espace approximativement constant par rapport à la plaque principale (52a), et soit une partie soit une plage entière d'une surface latérale faisant face axialement vers l'intérieur de la plaque principale (52a) est recouverte avec la plaque de séparation (6),
**caractérisée en ce que**
le ventilateur intérieur (51) est un ventilateur intérieur et extérieur (53) ayant une fonction combinée d'un ventilateur intérieur (51) faisant circuler l'air interne (71) et d'un ventilateur extérieur (52) aspirant l'air externe (72).

2. Machine électrique tournante selon la revendication 1,
dans laquelle un passage d'écoulement d'air externe (74) est prévu entre le noyau de stator (20) et le cadre (4), et
l'air externe (72) ayant traversé le ventilateur extérieur (52) est éjecté après avoir traversé le passage d'écoulement d'air externe (74).

3. Machine électrique tournante selon l'une quelconque des revendications 1 à 2,
dans laquelle la plaque de séparation (6) recouvre la plage entière de la surface latérale faisant face axialement vers l'intérieur de la plaque principale (52a) pour empêcher la plage entière de la surface latérale faisant face axialement vers l'intérieur d'être exposée à l'air interne (71) par le ventilateur intérieur (51).

4. Machine électrique tournante selon la revendication 3,
dans laquelle la plaque principale (52a) du ventilateur extérieur (52) comprend une partie inclinée (52a1) qui s'élargit vers l'extérieur dans la direction axiale lorsque la partie inclinée (52a1) s'étend vers l'extérieur dans une direction radiale à partir d'une partie montée sur le rotor (3) en tant que point de départ, et une partie verticale (52a2) qui s'étend verticalement vers l'extérieur dans la direction radiale en continu à partir d'une extrémité distale de la partie inclinée (52a1),
la plaque de séparation (6) comprend une partie verticale (6a) qui s'étend verticalement vers l'intérieur dans la direction radiale à partir d'une partie fixe soit au cadre (4) soit au noyau de stator (20) en tant que point de départ, et une partie inclinée (6b) qui est inclinée le long de la partie inclinée (52a1) de la plaque principale (52a) en continu à partir d'une extrémité distale de la partie verticale (6a) de la plaque de séparation (6), et
la partie inclinée (52a1) de la plaque principale (52a) et la partie inclinée (6b) de la plaque de séparation (6), et également la partie verticale (52a2) de la plaque principale (52a) et la partie verticale (6a) de la plaque de séparation (6) sont agencées pour avoir un espace approximativement constant, et la partie verticale (6a) et la partie inclinée (6b) de la plaque de séparation (6) recouvrent des surfaces entières de la partie inclinée (52a1) et de la partie verticale (52a2) de la plaque principale (52a) pour empêcher les surfaces entières d'être exposées à l'air interne (71) par le ventilateur intérieur (51).

5. Machine électrique tournante selon la revendication 3 ou 4,
dans laquelle la plaque de séparation (6) recouvrant la plage entière de la surface latérale faisant face axialement vers l'intérieur de la plaque principale (52a) s'étend jusqu'à un côté de diamètre intérieur du rotor (3) au-delà d'une surface de diamètre extérieur du noyau de rotor (30).

6. Machine électrique tournante selon l'une quelconque des revendications 1 à 2,
dans laquelle la plaque de séparation (6) recouvre la partie de la surface latérale faisant face axialement vers l'intérieur de la plaque principale (52a) pour empêcher la partie de la surface latérale faisant face axialement vers l'intérieur d'être exposée à l'air interne (71) par le ventilateur intérieur (51).

7. Machine électrique tournante selon la revendication 6,
dans laquelle la plaque principale (52a) du ventilateur extérieur (52) comprend une partie inclinée (52a1) qui s'élargit vers l'extérieur dans la direction axiale lorsque la partie inclinée (52a1) s'étend vers l'extérieur dans une direction radiale à partir d'une partie montée sur le rotor (3) en tant que point de départ, et une partie verticale (52a2) qui s'étend verticalement vers l'extérieur dans la direction radiale en continu à partir d'une extrémité distale de la partie inclinée (52a1),
la plaque de séparation (6) comprend une partie verticale (6a) qui s'étend verticalement vers l'intérieur dans la direction radiale à partir d'une partie fixe soit au cadre (4) soit au noyau de stator (20) en tant que point de départ, et une partie inclinée (6b) qui est inclinée le long de la partie inclinée (52a1) de la plaque principale (52a) en continu à partir d'une extrémité distale de la partie verticale (6a) de la plaque de séparation (6), et
la partie inclinée (52a1) de la plaque principale (52a) et la partie inclinée (6b) de la plaque de séparation (6), et également la partie verticale (52a2) de la plaque principale (52a) et la partie verticale (6a) de la plaque de séparation (6) sont agencées pour avoir un espace approximativement constant, et la partie verticale (6a) et la partie inclinée (6b) de la plaque de séparation (6) recouvrent une partie de surfaces de la partie inclinée (52a1) et de la partie verticale (52a2) de la plaque principale (52a) pour empêcher la partie d'être exposée à l'air interne (71) par le ventilateur intérieur (51).

8. Machine électrique tournante selon la revendication 6 ou 7,
dans laquelle la plaque de séparation (6) recouvrant la partie de la surface latérale faisant face axialement vers l'intérieur de la plaque principale (52a) a une position de diamètre intérieur du rotor (3) située plus près d'un côté de diamètre extérieur qu'une surface de diamètre extérieur du noyau de rotor (30).

9. Machine électrique tournante selon l'une quelconque des revendications 1 à 8,
dans laquelle la plaque de séparation (6) est fixée au cadre (4) et est constituée de métal.

10. Machine électrique tournante selon l'une quelconque des revendications 1 à 8,
dans laquelle la plaque de séparation (6) est fixée au noyau de stator (20) et est formée d'un matériau non magnétique.

11. Machine électrique tournante selon l'une quelconque des revendications 1 à 10,
dans laquelle les éléments de champ sont l'un quelconque parmi des barres de rotor (32), des aimants permanents, et des enroulements de rotor.
